# EUROPEAN PATENT SPECIFICATION

(11) **EP 3 875 713 B1**
(45) Date of publication and mention of the grant of the patent: **18.01.2023**
(21) Application number: 21160399.8
(22) Date of filing: 03.03.2021
(51) Int. Cl.: E04H 13/00, B29C 43/14, B29C 70/36, B29C 37/00, B44C 5/04

(54) **A PROCESS FOR REALISING TOMBSTONES, AND TOMBSTONES OBTAINED WITH THE PROCESS**
VERFAHREN ZUR HERSTELLUNG VON GRABSTEINEN UND MIT DEM VERFAHREN HERGESTELLTE GRABSTEINE
PROCÉDÉ PERMETTANT DE RÉALISER DES PIERRES TOMBALES ET PIERRES TOMBALES OBTENUES SELON LE PROCÉDÉ

(30) Priority: 05.03.2020 IT 202000004651
(43) Date of publication of application: 08.09.2021
(73) Proprietor: Rosso & Nero S.r.l., 63813 Monte Urano (FM) (IT)
(72) Inventor: ROMANELLI, Andrea, 63811 Sant'Elpidio a Mare (FM) (IT)
(74) Representative: Dall'Olio, Christian

(56) References cited:
- ES-A1- 2 177 436
- FR-A1- 2 917 991
- FR-A1- 2 976 010
- GB-A- 2 491 649

## Description

It is known that tombstones are associated to tombs and/or burial cells, as part of the memorial; for this purpose, the data of the deceased person (birth and death dates), photos of the departed as well, possibly, as religious images, decorations and more besides; in some cases, in the tombstones themselves, either in relief or in the form of a niche, seats for housing light sources (for example: lights, candles, lamps, etc.).

Regardless of the tombstones associated to monumental buildings, in particular religious (funeral art), to family tombs and/or various sculptures, to tombstones made of wood, metal, stone, etc., in the majority of cases these artefacts are made of granite, marble, limestone, slate and like materials.

By way of example as regards the prior art, reference will be made to tombstones made of marble.

It is necessary to have available a marble plate, hewn from a block of marble, which is then squared, smoothed and treated appropriately, in particular in the front face, on which the letters and numbers relating to the information of the deceased person will be cut or applied; it is clear that this process is significantly expensive.

Any eventual decorations and/or incisions made on the front face must be carried out by specialised operators, with a consequent increase in costs.

Further, the use of marble to realise the tombstones has an effect of reserves of the marble, i.e. the quarries still operating from which it is extracted, which represents a negative aspect in terms of the environmental impact to which the community is at present very sensitive.

It is also clear that the tombstone, in particular the front face thereof, is subject to atmospheric agents which tend to alter the peculiarity of the marble, in particular its aesthetic appearance; this drawback is clearer if the tombstone is not protected in any way, i.e. if it is outside.

Also known are the issues connected to the elimination of the tombstones at the time when the burial cells of cemeteries are put out of use. Known processes for realising tombstones are disclosed for example in FR 2 917 991 A, GB 2 491 649 A, FR 2 976 010 A1 and ES 2 177 436 A1.

The aim of the invention consists in providing a process for realising tombstones which enables obtaining the tombstones at a decidedly lower cost than for marble tombstones.

A further aim of the invention is to provide a process with which tombstones can be obtained the front face of which comprises decorations and/or incisions, and/or niches, and/or reliefs, and/or combinations of letters and numbers, all of which at a much lower cost than marble tombstones comprising the same decorations and/or incisions, and/or niches, and/or reliefs, and/or combinations of letters and numbers.

A further aim of the invention is to realise, by means of the process of the preceding aims, a tombstone the front face of which is effectively protected by the atmospheric agents.

A further aim of the invention consists in providing a process, with which to realise tombstones, which uses recyclable material.

A further aim of the invention is to provide a tombstone constituted by recyclable material obtained from renewable sources.

The above-mentioned advantages are obtained according to the contents of the claims.

Further characteristics of the invention will emerge from the following description, with reference to the appended tables of drawings, in which:

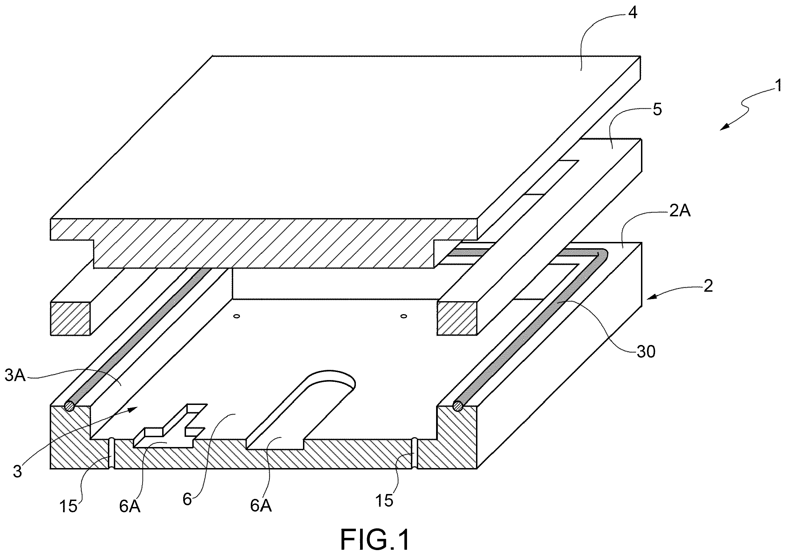

- figure 1 is an exploded perspective view of some components of a mould used to carry out the process, object of the invention;

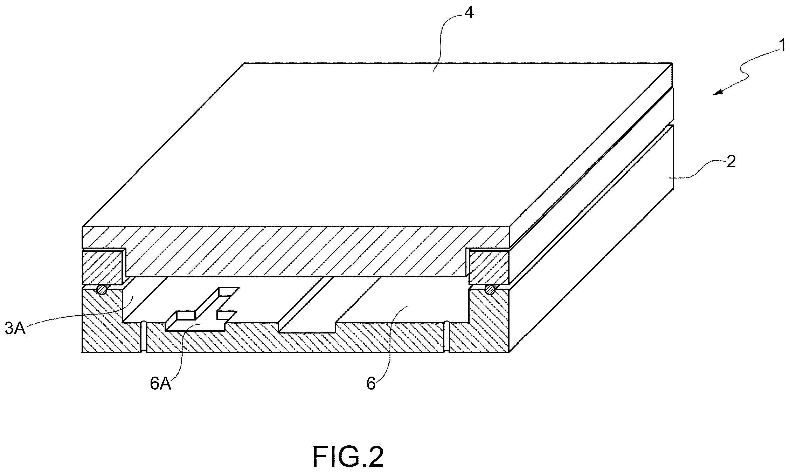

- figure 2 is a perspective view of the assembled mould, with at least a significant component removed better to highlight constructional aspects of the mould itself;

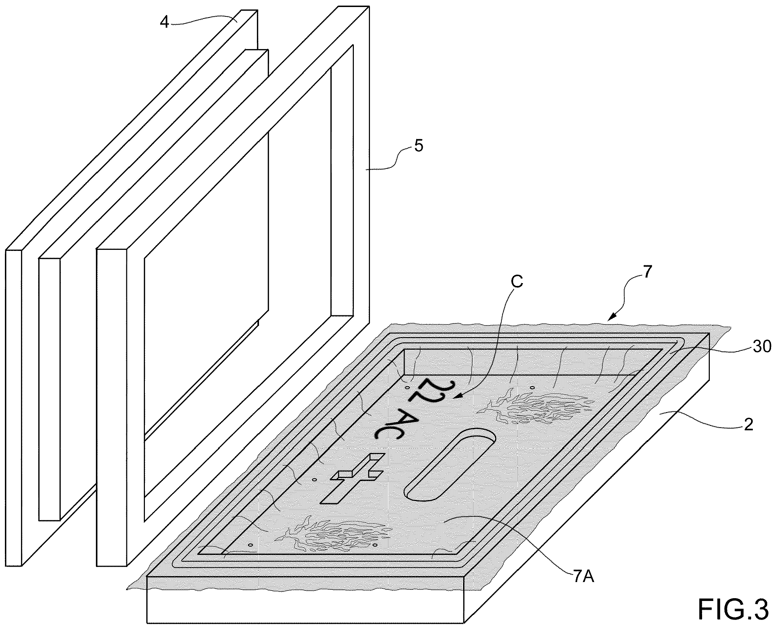

- figure 3 is an exploded view, of a further perspective view of all the significant components used to realise the described process;

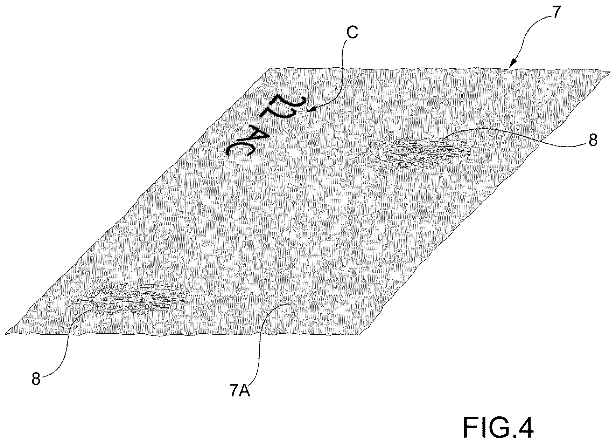

- figure 4 is a schematic view of a protective sheet of synthetic resin used in the process;
- figure 5A is a section view of the mould in an open configuration, without the protective film;
- figure 5B is the same view as in figure 5A, with the protective film associated to the mould;
- figure 5C is the section of figure 5B following the completion of the profiled design in the mould of a thermoplastic polymer in the molten state;
- figure 6 is a perspective view of a tombstone obtained using the process, just extracted from the mould;
- figure 6A is the same view as in figure 6 with the protective sheet trimmed with respect to the body of the tombstone.

With reference to figures, reference numeral (1) denotes, in its entirety, a mould comprising: a base (2) in which a profiled design (3) is afforded: a cover (4) for closing the profiled design of the mould; a ring (5), interposed between the base and the cover; a wire-shaped component (30), having a rounded section, partly recessed on the surface (2A) of the base (2) facing towards the ring (5).

A perimeter extension (3A) of the profiled design which identifies the perimeter extension of a corresponding tombstone (L), obtained using the process, which is an object of the invention.

The perimeter extension delimits an operating surface (6) conformed in a complementary way to the conformation of the front face (10) of the predetermined tombstone (L). In other terms, to obtain reliefs in this face it is necessary to include corresponding niches (6A) made in the operating surface (6); vice versa, if recesses are to be made in the front face (10) of the tombstone (L) the operating surface must have corresponding projections.

By way of example, at least two niches 6A are made in the surface (6), of which one will give rise, as illustrated in the following, to a corresponding crucifix in the face (10) of the tombstone.

The base (2) has a series of through-holes (15) which on one side appear on the operating surface (6) and on the other side are connectable to a source of suction, not illustrated, the function of which, when activated, consists in placing the above-mentioned operating surface (6) under depression.

Reference numeral (7) denotes a flexible and elastic protective sheet made of a synthetic resin, for example TPU, PVC or known polymer mixtures.

A face 7A of the sheet 7 comprises one or more decorations (8), for example of a sacred, floral or other type, and possibly combinations (C) of letters and/or numbers with which to identify the deceased and relative birth and death dates. These decorations and/or combinations of letters and numbers are obtainable according to known processes, for example using digital printers using, when required, ecological inks.

These decorations and/or combinations of letters and numbers can be applied to the inner surface (7A) of the sheet (7) or realised directly on the inner surface (7A). The protective film, observed from the external surface (7B) thereof, must enable viewing of the relative inner surface (7A), i.e. a view of the decorations (8) and/or combinations (C) of letters and numbers.

The protective film (7) is advantageously washable, in particular, the surface (7B) thereof not affected by the decorations (8) and/or combinations of letters and numbers.

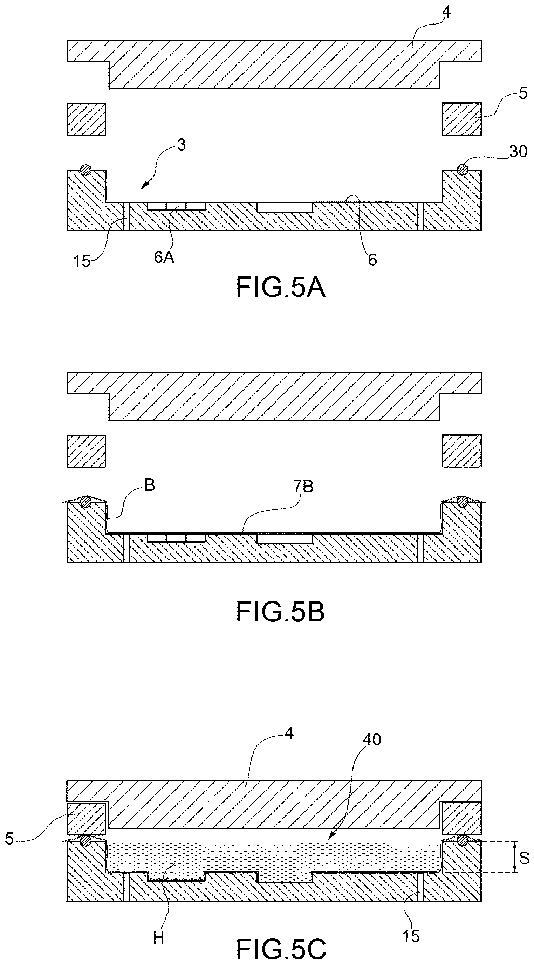

With particular reference to figures 5A, 5B, 5C, a description is given of the process which is an object of the invention, with which the tombstone (L) is realised.

The process includes the use of the flexible and elastic protective sheet (7), of the mould (1) with the relative base (2) conformed as specified in the foregoing, and of a thermoplastic polymer in molten state at a temperature that is lower than the melting temperature of the protective sheet (7); by way of example the thermoplastic polymer is constituted by polyester-based bi-component polyurethane.

The process comprises further steps as listed below.
- Positioning the protective sheet (7) internally of the profiled design (3) of the mould, so as to cover at least the operating surface (6) taking care to orientate the face (7A) of the sheet towards the outside of the profiled design (3), i.e. not in contact with the operating surface (6). The extension of the sheet is advantageously such that, as well as covering the operating surface (6), it also affects the perimeter extension (3A) of the profiled design up to projecting therefrom (figure 5B); in this situation the edge of the sheet goes to rest on the wire-shaped component (30). The ring (5) stabilises the position of the sheet with respect to the profiled design.
- Activation of the source of suction, with a consequent depression step of the operating surface (6); it follows that the protective sheet (6), being flexible and elastic, matches (with the outer face (7B) thereof) with the surface (6) (fig. 5B).
- Injection of the thermoplastic polymer (H) in the molten state into the profiled design (3) so as to define therein a predetermined thickness (S).

The weight of the molten polymer, in combination with the suction action generated via the holes (15) in the operating surface (6), both act on the protective sheet (7) which deforms elastically to marry the profile of the operating surface (6). As specified, the melting point of the sheet (7) is higher than the temperature with which the polymer liquid is injected into the profiled design (3): in this way the characteristics of flexibility and deformability of the sheet (7) are not altered.

In the illustrated example the mould (1) is open at the top; when the injection is complete the mould is closed by the relative cover.

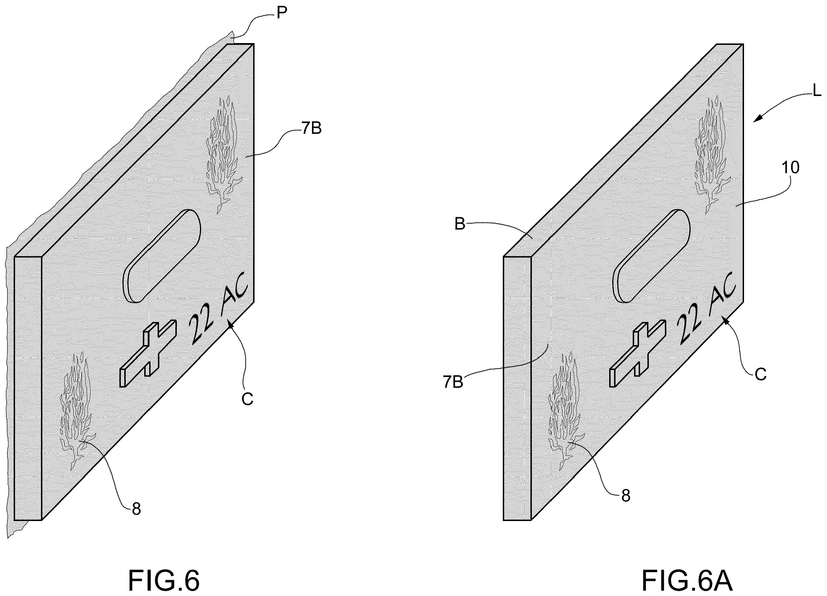

With the cooling and consequent solidification of the thermoplastic polymer, the sheet 7 stably adheres by the inner face (7A) thereof to the solidified body (40) of the thermoplastic polymer. - Extracting, from the profiled design, after a predetermined time which enables solidification of the thermoplastic polymer, the whole solidified body (40) - protective sheet (7) assembly which identifies the corresponding predetermined tombstone (L): see figure 6.

In the described embodiment, a depression step of the operating surface (6) is included, carried out in phase relation with the injection of the polymer into the profiled design (3), for example prior to the injection or during it.

In a process variant this last aspect is not carried out, as the weight of the polymer in the molten state, on the act of injection, can be sufficient to exert a pressure on the protective sheet (7) so that the protective sheet (7) marries the profile of the underlying operating surface (6) of the mould.

In a further variant the thermoplastic polymer is injected at pressure inside the profiled design; in this case too the depression step of the operating surface (6) might not be included.

In a further variant of the process, the protective sheet (7) covers only the operating surface (6).

In the illustrated embodiment the edge (B) of the protective sheet also affects the perimeter extension (3A) of the profiled design (3), even projecting therefrom (figure 6); it is obvious that any portions (P) of the sheet (7) which project from the solidified body (40) can easily be cut according to processes known to the expert in the sector (see figure 6A).

The fact of including parts of the sheet (7) (those not associated to the front face of the tombstone (L)) sunken into the solidified body (40), is extremely advantageous as concerns the anchoring of the sheet (7) to the tombstone.

As already mentioned, the face (7A) of the tombstone, i.e. the surface thereof affected by the decorations (8) and/or combinations of letters and numbers, is in contact with the solidified body (30): it follows that the decorations and/or combinations of letters and numbers are protected from atmospheric agents and from contact with visitors to the deceased.

The remaining face (7B) of the sheet, external to the solidified body (40), is washable, with all the advantages that brings.

Definitively, the tombstone (L), obtained using the process, fully satisfies the aims set down in the preamble.

In fact, with the process of the invention a tombstone is obtained with a body (40) having a plate shape, made of thermoplastic polymer,with the front face having a predetermined profile, covered and protected by the sheet (7): the cost reduction with respect to the prior art is clear, for example the cost of marble tombstones. The appearance of the front face of the tombstone is due to the combination of what is obtained (by printing), consequent to the conformation of the operating surface 6 and to the decorations and/or combinations of letters and numbers (placed in the face (7A) of the sheet (7).

With an operating surface (6) including some basic aspects (for example religious images), tombstones can be obtained in short times (for example already on the day of the funeral) as the data of the deceased, definable with the combinations (C) of letters and numbers, can be placed on the face (7A) of the sheet (7), using, as indicated above, digital printers.

The use of the protective sheet (7) not only has the advantageous aspects already taken into consideration, but also provides a tombstone the front face of which is washable.

No less important are the ecological aspects correlated to the present invention.

In fact recyclable materials are used, which is particularly advantageous when the burial cells are put out of use; it is also possible to use recycled material, with all the advantages that brings.

A further aspect of special relevance is due to the fact that the use of tombstones obtained using the process of the invention limits the impoverishment of marble quarries.

It is understood that the above has been described by way of example and that technical-functional variants are considered to fall within the protective scope of the invention as claimed in the following.

## Claims

1. A process for realising tombstones, the tombstones comprising a relative front face, to which are associated at least identifying data of a corresponding deceased person, the process includes use of at least a flexible elastic protective sheet (7) made of a synthetic resin, and of at least a thermoplastic polymer in molten state at a temperature that is lower than the melting temperature of the protective sheet (7), the process being **characterised in that** it comprises steps as follow:
a) predisposing a die (1) comprising a base (2), in which a profiled design (3) is afforded, a perimeter extension (3A) of which identifies the perimeter extension of a corresponding predetermined tombstone (L), the perimeter extension delimiting an operating surface (6) conformed in a complementary way to the conformation of the front face (10) of the predetermined tombstone (L);
b) positioning the protective sheet (7) of synthetic resin in said profiled design (3) to cover at least the operating surface (6);
c) injecting the thermoplastic polymer in the molten state into the profiled design (3) with a consequent pressure exerted by the weight of the molten polymer on the protective sheet (7) so that the protective sheet (7) deforms elastically to match the profile of the operating surface (6), cooling and consequent solidification of the thermoplastic polymer injected into the profiled design (3) leading to a stable joining of the protective sheet (7) to the adjacent surface of the solidified body (40) of thermoplastic polymer injected to define the front face of the predetermined tombstone;
d) extracting, from the profiled design, after a predetermined time which enables solidification of the thermoplastic polymer injected, the whole solidified body (40) - protective sheet (7) assembly which identifies the predetermined tombstone.

2. The process of the preceding claim, **characterised in that** in phase relation with the actuation of step c), a depression step of the operating surface (6) of the profiled design (3) of the die (1) is carried out.

3. The process of the preceding claim, **characterised in that** the depression step of the operating surface (6) is actuated in advance with respect to step c).

4. The process of any one of the preceding claims, **characterised in that** the protective sheet (7) of synthetic resin at least partly covers the perimeter extension (3A) of the profiled design (3).

5. The process of the preceding claim, **characterised in that** the protective sheet (7) projects, with at least a part of the edge thereof, from the profiled design.

6. The process of any one of the preceding claims, **characterised in that** at least a decoration and/or combination of letters and numbers is associated to the inner face (7A) of the protective sheet (7) of synthetic resin, being the face (7A) stably joined to the body (40) of solidified thermoplastic polymer and **in that** the protective sheet, observed from the outer face (7B) thereof, enables viewing the decoration and/or combination of letters and numbers.

7. The process of claim 6, **characterised in that** the at least a decoration and/or combination of letters and numbers is applied to the inner face (7A) of the protective sheet (7).

8. The process of claim 6, **characterised in that** the decoration and/or combination of letters and numbers is realised in the inner face (7A) of the protective sheet.

9. The process of claim 1, **characterised in that** in step c), with the injection completed, a predetermined pressure is exerted on the thermoplastic polymer in the molten state covering the profiled design.

10. The process of any one of the preceding claims, **characterised in that** at least the outer face (7B) of the protective sheet is washable.

11. A tombstone obtained by means of the process of the preceding claims, the tombstone comprises a body (40) of thermoplastic polymer with a front face (10) of which comprises at least the identifying data of a deceased person, reliefs and/or niches, **characterised in that** it further comprises a protective sheet 7 of synthetic resin, constrained to at least the front face (10) to match the profile thereof.

12. The tombstone of claim 11, **characterised in that** the edge of the protective sheet (7) at least partly covers the body (40).

13. The tombstone of any one of claims 11, 12, **characterised in that** at least a decoration (8) and/or combination of letters and numbers is associated to the inner face (7A) of the protective sheet (7) of synthetic resin, being the face (7A) stably constrained to the body (40) of solidified thermoplastic polymer and **in that** the protective sheet, observed from the outer face (7B) thereof, enables viewing the decoration and/or combination of letters and numbers.

14. The tombstone of claim 13, **characterised in that** the at least a decoration and/or combination of letters and numbers is applied to the inner face (7A) of the protective sheet (7).

15. The tombstone of claim 13, **characterised in that** the at least a decoration and/or combination of letters and numbers is realised in the inner face (7A) of the protective sheet (7).

## Patentansprüche

1. Verfahren zur Herstellung von Grabsteinen, wobei die Grabsteine eine entsprechende Vorderseite umfassen, der zumindest Kenndaten einer entsprechenden verstorbenen Person zugeordnet sind, wobei das Verfahren die Verwendung von zumindest einer flexiblen, elastischen Schutzschicht (7) aus Kunstharz, und von zumindest einem thermoplastischen Polymer in geschmolzenem Zustand mit einer Temperatur, die niedriger ist als die Schmelztemperatur der Schutzschicht (7), beinhaltet, wobei das Verfahren **dadurch gekennzeichnet ist, dass** es die folgenden Schritte beinhaltet:
a) Vorbereiten einer Gussform (1) umfassend ein Unterteil (2), in dem ein profilierter Abdruck (3) ausgestaltet ist, dessen Umfangserstreckung (3A) die Umfangserstreckung eines entsprechenden vorherbestimmten Grabsteins (L) kennzeichnet, wobei die Umfangserstreckung eine Arbeitsoberfläche (6) begrenzt, die komplementär zu der Gestaltung der Vorderseite (10) des vorherbestimmten Grabsteins (L) gestaltet ist;
b) Positionieren der Schutzschicht (7) aus Kunstharz in dem profilierten Abdruck (3), um zumindest die Arbeitsoberfläche (6) zu bedecken;
c) Einspritzen des thermoplastischen Polymers in geschmolzenem Zustand in den profilierten Abdruck (3), mit darauf folgender Druckausübung durch das Gewicht des geschmolzenen Polymers auf die Schutzschicht (7), so dass die Schutzschicht (7) elastisch verformt wird, um sich dem Profil der Arbeitsoberfläche (6) anzupassen, wobei die Abkühlung und daraus folgende Aushärtung des thermoplastischen Polymers, das in den profilierten Abdruck (3) eingespritzt wurde, zu einer stabilen Verbindung der Schutzschicht (7) mit der daran angrenzenden Oberfläche des ausgehärteten Körpers (40) aus dem eingespritzten thermoplastischen Polymer führt, um die Vorderseite des vorherbestimmten Grabsteins zu bilden;
d) Entnehmen, nach einer vorgegebenen Zeit, die das Aushärten des eingespritzten thermoplastischen Polymers ermöglicht, der gesamten Einheit aus ausgehärtetem Körper (40) und Schutzschicht (7), die den vorherbestimmten Grabstein bildet, aus dem profilierten Abdruck.

2. Verfahren nach dem vorhergehenden Anspruch, **dadurch gekennzeichnet, dass**, in Phasenbeziehung mit der Durchführung von Schritt c), ein Schritt des In-Unterdruck-Setzens der Arbeitsoberfläche (6) des profilierten Abdrucks (3) der Gussform (1) ausgeführt wird.

3. Verfahren nach dem vorhergehenden Anspruch, **dadurch gekennzeichnet, dass** der Schritt des In-Unterdruck-Setzens der Arbeitsoberfläche (6) zeitlich vor dem Schritt c) ausgeführt wird.

4. Verfahren nach einem der vorhergehenden Ansprüche, **dadurch gekennzeichnet, dass** die Schutzschicht (7) aus Kunstharz zumindest teilweise die Umfangserstreckung (3A) des profilierten Abdrucks (3) bedeckt.

5. Verfahren nach dem vorhergehenden Anspruch, **dadurch gekennzeichnet, dass** die Schutzschicht (7), mit zumindest einem Teil ihres Randes, über den profilierten Abdruck hervorsteht.

6. Verfahren nach einem der vorhergehenden Ansprüche, **dadurch gekennzeichnet, dass** zumindest eine Verzierung und/oder Kombination aus Buchstaben und Ziffern mit der Innenfläche (7A) der Schutzschicht (7) aus Kunstharz verbunden ist, da die Fläche (7A) dauerhaft mit dem Körper (40) aus ausgehärtetem thermoplastischem Polymer verbunden ist, und dadurch, dass die Schutzschicht, von ihrer Außenfläche (7B) betrachtet, es ermöglicht, die Verzierung und/oder Kombination aus Buchstaben und Ziffern zu sehen.

7. Verfahren nach Anspruch 6, **dadurch gekennzeichnet, dass** die zumindest eine Verzierung und/oder Kombination aus Buchstaben und Ziffern auf der Innenfläche (7A) der Schutzschicht (7) aufgebracht ist.

8. Verfahren nach Anspruch 6, **dadurch gekennzeichnet, dass** die zumindest eine Verzierung und/oder Kombination aus Buchstaben und Ziffern an der Innenfläche (7A) der Schutzschicht (7) ausgefertigt ist.

9. Verfahren nach Anspruch 1, **dadurch gekennzeichnet, dass** in Schritt c), nach vollständig erfolgter Einspritzung, ein vorgegebener Druck auf das thermoplastische Polymer in geschmolzenem Zustand ausgeübt wird, das den profilierten Abdruck bedeckt.

10. Verfahren nach einem der vorhergehenden Ansprüche, **dadurch gekennzeichnet, dass** zumindest die Außenfläche (7B) der Schutzschicht abwaschbar ist.

11. Grabstein, der mit dem Verfahren nach den vorhergehenden Ansprüchen hergestellt wurde, wobei der Grabstein einen Körper (40) aus thermoplastischem Polymer umfasst, wobei dessen Vorderseite (10) zumindest die Kenndaten einer verstorbenen Person, Reliefs und/oder Nischen umfasst, **dadurch gekennzeichnet, dass** er ferner eine Schutzschicht (7) aus Kunstharz umfasst, die an zumindest der Vorderseite (10) festgelegt ist, um sich deren Profil anzupassen.

12. Grabstein nach Anspruch 11, **dadurch gekennzeichnet, dass** der Rand der Schutzschicht (7) zumindest teilweise den Körper (40) bedeckt.

13. Grabstein nach einem der Ansprüche 11, 12, **dadurch gekennzeichnet, dass** zumindest eine Verzierung (8) und/oder Kombination aus Buchstaben und Ziffern mit der Innenfläche (7A) der Schutzschicht (7) aus Kunstharz verbunden ist, da die Fläche (7A) dauerhaft mit dem Körper (40) aus ausgehärtetem thermoplastischem Polymer verbunden ist, und dadurch, dass die Schutzschicht, von ihrer Außenfläche (7B) betrachtet, es ermöglicht, die Verzierung und/oder Kombination aus Buchstaben und Ziffern zu sehen.

14. Grabstein nach Anspruch 13, **dadurch gekennzeichnet, dass** die zumindest eine Verzierung und/oder Kombination aus Buchstaben und Ziffern auf der Innenfläche (7A) der Schutzschicht (7) aufgebracht ist.

15. Grabstein nach Anspruch 13, **dadurch gekennzeichnet, dass** die zumindest eine Verzierung und/oder Kombination aus Buchstaben und Ziffern an der Innenfläche (7A) der Schutzschicht (7) ausgefertigt ist.

## Revendications

1. Un procédé permettant de réaliser des pierres tombales, les pierres tombales comprenant une face avant relative, à laquelle sont associées au moins des données d'identification d'une personne décédée correspondante, le procédé prévoit l'utilisation d'au moins une feuille de protection (7), flexible et élastique, réalisée en résine synthétique, et d'au moins un polymère thermoplastique à l'état fondu à une température qui est inférieure à la température de fusion de la feuille de protection (7), le procédé étant **caractérisé en ce qu'**il comprend les étapes suivantes :
a) prédisposer un moule (1) comprenant une base (2), dans laquelle une empreinte profilée (3) est réalisée, dont une extension périmétrique (3A) identifie l'extension périmétrique d'une pierre tombale prédéfinie (L) correspondante, l'extension périmétrique délimitant une surface opérationnelle (6) conformée de façon complémentaire à la conformation de la face avant (10) de la pierre tombale prédéfinie (L) ;
b) positionner la feuille de protection (7) de résine synthétique dans ladite empreinte profilée (3) pour recouvrir au moins la surface opérationnelle (6) ;
c) injecter le polymère thermoplastique à l'état fondu dans l'empreinte profilée (3) avec une pression conséquente exercée par le poids du polymère fondu sur la feuille de protection (7) de sorte que la feuille de protection (7) se déforme élastiquement pour correspondre au profil de la surface opérationnelle (6), le refroidissement et la solidification conséquente du polymère thermoplastique injecté dans l'empreinte profilée (3) menant à une jonction stable de la feuille de protection (7) avec la surface adjacente du corps solidifié (40) de polymère thermoplastique injecté pour définir la face avant de la pierre tombale prédéfinie ;
d) extraire, de l'empreinte profilée, après un temps prédéfini qui permet la solidification du polymère thermoplastique injecté, tout l'ensemble corps solidifié (40) - feuille de protection (7) qui identifie la pierre tombale prédéfinie.

2. Le procédé selon la revendication précédente, **caractérisé en ce que**, en relation de phase avec la mise en œuvre de l'étape c), une étape de mise en dépression de la surface opérationnelle (6) de l'empreinte profilée (3) du moule (1) est effectuée.

3. Le procédé selon la revendication précédente, **caractérisé en ce que** l'étape de mise en dépression de la surface opérationnelle (6) est mise en œuvre à l'avance par rapport à l'étape c).

4. Le procédé selon l'une quelconque des revendications précédentes, **caractérisé en ce que** la feuille de protection (7) de résine synthétique recouvre au moins partiellement l'extension périmétrique (3A) de l'empreinte profilée (3).

5. Le procédé selon la revendication précédente, **caractérisé en ce que** la feuille de protection (7) dépasse, avec au moins une partie de son bord, de l'empreinte profilée.

6. Le procédé selon l'une quelconque des revendications précédentes, **caractérisé en ce qu'**au moins une décoration et/ou combinaison de lettres et de numéros est associée à la face intérieure (7A) de la feuille de protection (7) de résine synthétique, la face (7A) étant celle qui est jointe de façon stable au corps (40) de polymère thermoplastique solidifié, et **en ce que** la feuille de protection, observée depuis sa face extérieure (7B), permet de voir la décoration et/ou combinaison de lettres et de numéros.

7. Le procédé selon la revendication 6, **caractérisé en ce que** ladite au moins une décoration et/ou combinaison de lettres et de numéros est appliquée sur la face intérieure (7A) de la feuille de protection (7).

8. Le procédé selon la revendication 6, **caractérisé en ce que** ladite au moins une décoration et/ou combinaison de lettres et de numéros est réalisée dans la face intérieure (7A) de la feuille de protection (7).

9. Le procédé selon la revendication 1, **caractérisé en ce que** lors de l'étape c), avec l'injection terminée, une pression prédéfinie est exercée sur le polymère thermoplastique à l'état fondu recouvrant l'empreinte profilée.

10. Le procédé selon l'une quelconque des revendications précédentes, **caractérisé en ce qu'**au moins la face extérieure (7B) de la feuille de protection est lavable.

11. Une pierre tombale obtenue selon le procédé des revendications précédentes, la pierre tombale comprend un corps (40) de polymère thermoplastique dont une face avant (10) comprend au moins les données d'identification d'une personne décédée, des reliefs et/ou niches, **caractérisée en ce qu'**elle comprend en outre une feuille de protection (7) de résine synthétique, assujettie à au moins la face avant (10) pour correspondre au profil de celle-ci.

12. La pierre tombale selon la revendication 11, **caractérisée en ce que** le bord de la feuille de protection (7) recouvre au moins partiellement le corps (40) .

13. La pierre tombale selon l'une quelconque des revendications 11, 12, **caractérisée en ce qu'**au moins une décoration (8) et/ou combinaison de lettres et de numéros est associée à la face intérieure (7A) de la feuille de protection (7) de résine synthétique, la face (7A) étant celle qui est assujettie au corps (40) de polymère thermoplastique solidifié, et **en ce que** la feuille de protection, observée depuis sa face extérieure (7B), permet de voir la décoration et/ou combinaison de lettres et de numéros.

14. La pierre tombale selon la revendication 13, **caractérisée en ce que** ladite au moins une décoration et/ou combinaison de lettres et de numéros est appliquée sur la face intérieure (7A) de la feuille de protection (7) .

15. La pierre tombale selon la revendication 13, **caractérisée en ce que** ladite au moins une décoration et/ou combinaison de lettres et de numéros est réalisée dans la face intérieure (7A) de la feuille de protection (7) .
